# EUROPEAN PATENT SPECIFICATION

(11) **EP 2 416 071 B1**
(45) Date of publication and mention of the grant of the patent: **18.09.2013**
(21) Application number: 11171505.8
(22) Date of filing: 27.06.2011
(51) Int. Cl.: B65D 83/24, F16K 1/30, F24C 3/14

(54) **Gas container and associated cap**
Gaskartusche und Mitadapter
Recharge de gaz et adaptateur associé

(30) Priority: 06.08.2010 IT PR20100066
(43) Date of publication of application: 08.02.2012
(73) Proprietor: KEMPER S.R.L., 43044 Collecchio (PR) (IT)
(72) Inventor: Mori, Gabriele, 43045 FORNOVO DI TARO (PARMA) (IT)
(74) Representative: Guareschi, Antonella

(56) References cited:
- DE-B3-102005 006 971
- GB-A- 1 232 155
- JP-A- 8 337 278
- US-A- 3 731 718
- US-A- 4 569 363
- US-A1- 2007 204 843

## Description

This invention relates to bottle, in particular a bottle for holding fuels to be used for suppling camping gas stoves.

Document JP8337278 discloses a container with a spray valve and a cap with a protrusion in order to prevent the explosion of the container.

Document US3, 731, 718 discloses an adapter connector for use in connecting a reserve gas supply into a gas system.

Document US2007/0204843 discloses a device for connecting gas equipment to a valve of a gas cartridge.

Bottles are known in the prior art comprising a container designed to hold a fluid to be stored. The container comprises a fluid delivery line. The delivery line can be closed by a valve positioned at a neck of the container. To allow supply of the fluid a dispensing head can be applied to the neck of the container, the dispensing head being equipped with a pusher allowing opening of the valve and thus permitting dispensing of the fluid.

The bottles are not free from drawbacks. In effect, the bottles containing pressurised gases, but especially bottles containing combustible fluids, are made of a metallic material which it would be advantageous to recycle. The recycling operations for these bottles could require that the bottles be placed in presses or in high temperature furnaces. If combustible fluid is still present in these cases dangerous explosions could occur.

In this context, the technical purpose which forms the basis of this invention is to provide a bottle that overcomes the above mentioned drawbacks of the prior art.

More specifically, the aim of this invention is to provide a bottle which can avoid explosions during disposal of the product.

Another aim of this invention is to optimise the components and production costs of a bottle that is capable of guaranteeing complete emptying of the container for the user.

The technical purpose and aims specified are substantially achieved by a bottle comprising the technical features set out in one or more of the accompanying claims.

Further features and advantages of this invention are more apparent from the non-limiting description which follows of a preferred, non-limiting embodiment of a botle as illustrated in the accompanying drawings, in which:
- Figure 1 shows a first embodiment of a bottle according to this invention.
- Figure 2 and 3 show the first embodiment in a different configuration before and after the connection of two components of the bottle according to this invention.
- Figure 4 and 5 show a second embodiment before and after the connection of two components of the bottle according to this invention.
- Figure 6 and 7 show a third embodiment before and after the connection of two components of the bottle according to this invention.
- Figure 8 and 9 show a fourth embodiment before and after the connection of two components of the bottle according to this invention.
- Figure 10 shows a component of the bottle in another embodiment;
- Figure 11 and 12 show a fourth embodiment before and after the connection of two components of the bottle according to this invention.
- Figure 13 is a perspective view of a component of Figure 11.

With reference to the accompanying drawings, the numeral 1 denotes a bottle.

The bottle 1 comprises a container 2 of a pressurised fluid. Advantageously, the pressurised fluid is combustible, for example propane. The container 2 in turn comprises:
- a storage chamber 20 for the fluid;
- a delivery conduit 21 for the fluid, the conduit 21 extending at least between the chamber 20 and an outlet 22 for the exit of the fluid from the container 2;
- a valve 3 situated along the delivery conduit 21 (also meaning the end of the conduit 21) and movable between a first position in which it prevents the discharge of pressurised fluid from the container 2 and a second position in which it permits the discharge of pressurised fluid from the container 2.

Normally, the container 2 comprises elastic means 30 which push the valve 3 from the second to the first position. In the absence of a force applied outside the container 2, the valve 3 is in the first position and prevents the discharge of pressurised fluid.

The bottle 1 also comprises a cap 4 for covering the outlet 22 for the exit of the fluid from the container 2. The cap 4 is preferably made from a body physically separable (even if it can be coupled) from the container 2. The cap 4 is connected to the container 2 at least in a first configuration of the bottle 1.

The cap 4 further comprises:
- means 5 for venting and emptying the residual fluid present in the storage chamber 20 which in turn comprises a pusher 50 suitable for interacting with the valve 3 (the cap 4 is however distinct from a dispensing device normally used during the normal use of the bottle 1, said dispensing device being a device outside the bottle 1, easily removable from the dispensing device and not object of this description);
- a first portion 6 from which the pusher 50, extending along its preponderant axis 51 of extension, projects outward as far as its first end 52.

In the first configuration the pusher 50 projects from said first portion 6 toward said valve 3. More specifically, in the first configuration the pusher 50 is at least partly inserted in the container 2, typically it is at least partly inserted in the delivery conduit 21. Preferably, the pusher 50 is straight. Typically, the pusher 50 projects in a cantilever fashion from the first portion 6.

The cap 4 also comprises first coupling means 7 which in the first configuration are connected to the container 2. The first coupling means 7 extend at least in part along at least a part (preferably all) of an imaginary closed line which surrounds the axis 51 of the pusher 50. Conveniently, the first coupling means 7 extend (if necessary, with breaks) at least along 75% (preferably at least along 90%) of a specific imaginary circumference which surrounds the axis 51 of the pusher 50.

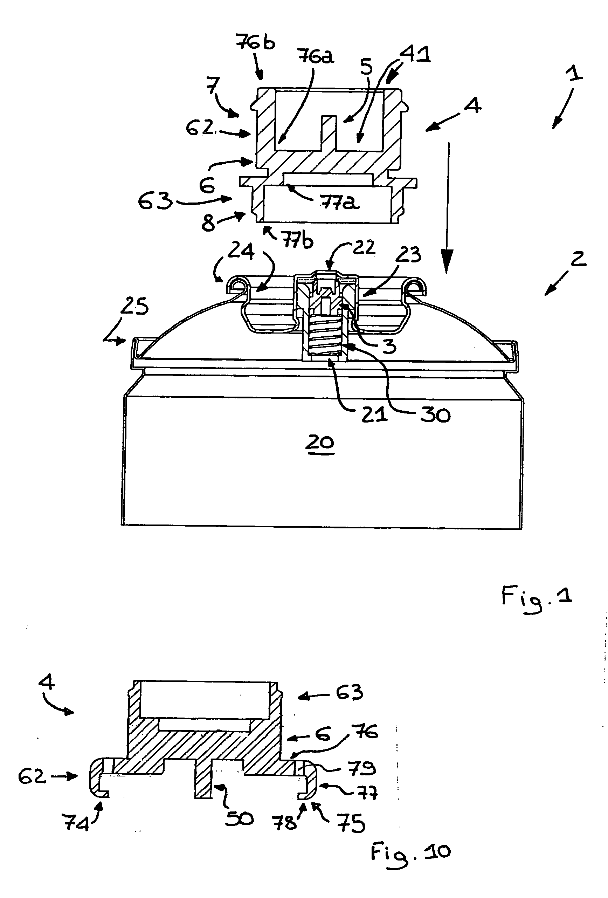

The first means 7 of coupling with the container 2 are of a removable type. Conveniently, the imaginary line is integral with the axis 51 of the pusher 50. Typically, the imaginary line lies in a plane at right angles with the axis 51 of the pusher 50. The imaginary line in the preferred embidiment surrounds the pusher 50. In the embodiments shown in Figures 1 to the first coupling means 7 extend from the first portion 6, but are outside the pusher 50.

In the first configuration the pusher 50 necessarily pushes the valve 3 into the second position. When the first coupling means 7 are connected to the container 2, the pusher 50 pushes the valve 3 into the second position. Conveniently, it is not possible for the valve 3 to be in the first position in the first configuration. The cap 4 and the container 2 in the first configuration form a channel that places the storage chamber 20 and the outside of the bottle 1 in fluid communication. This allows the venting and the emptying of the pressurised fluid present in the storage chamber.

For example, the channel is at least partly formed in the pusher 50 (the channel might be surrounded by the pusher 50 or formed along its outer surface for example comprising a groove along the outer surface of the pusher 50).

In another embodiment, in the first configuration the dimensions of the pusher 50 in a first section measured at right angles to the axis 51 of the pusher 50 are less than the path section of the conduit 21 measured in the same first section. Advantageously, the first section may be measured at all the points in which the pusher 50 is inside the conduit 21 in the first configuration of the bottle 1. Consequently, the channel is at least partly defined by the gap interposed between the pusher 50 and the walls of the conduit 21.

In addition, the channel may cross the first portion 6. A first and a second face 41, 42 of the cap 4 are thus fluid dynamically connected; the first face 41 in the first configuration faces the container 2, the second face 42 in the second configuration faces the container 2. The first and the second faces 41, 42 are opposite each other.

The cap 4 is also connectable to the container 2 in a second configuration of the bottle 1 which is distinct from the first configuration. The cap 4 comprises second coupling means 8 which in the second configuration are connected to the container 2 to allow the cap 4 to protect the outlet 22 from impacts with the outside. The second means 8 of coupling with the container are of a removable type.

As may be seen in all the accompanying example embodiments, the first portion 6 is interposed between the first and the second coupling means 7, 8. The connection of the first coupling means 7 with the container 2 is alternative to the connection of the second coupling means 8 with the container 2.

The cap 4 comprises a second and a third portion 62, 63 which extend away along two opposite directions from the first portion 6.

The first and the second coupling means 7,8 are at least partly (preferably completely) respectively formed in the second and third portion 62, 63. In that sense, the first and the second coupling means 7, 8 project away from each other along two opposite directions from the first portion 6. In the second configuration the pusher 50 extends away from the container 2 from the first portion 6. Typically, the bottle 1 is in the second configuration before being put on the market (to best perform its protective action). The adjectives "first" and "second" in the expressions "first configuration" and "second configuration" distinguish two distinct configurations, but do not indicate that the second configuration is adopted after the first configuration. The second portion 62 may comprise a plurality of arms which extend away from the first portion 6. Conveniently, the first coupling means 7 comprise a plurality of arms which extend away from the first portion 6 (conveniently, at least three of the arms are present; advantageously, the arms extend in a cantilever fashion from the first portion 6). Alternatively, the second portion 62 comprises a single annular body extending away from the first portion and inside of which there is the pusher 50 (as for example in the embodiments illustrated). Conveniently, the first coupling means 7 comprise the single annular body. Similarly, the third portion 63 comprises a plurality of arms which extend away from the first portion 6. More specifically, the second coupling means 8 comprise the plurality of arms forming part of the third portion 63. Alternatively, the second coupling means 8 comprise a single annular body 81 extending away from the first portion 6 (as for example in the embodiments illustrated). More specifically, the second coupling means 8 comprise a single annular body 81 forming part of the third portion 63. The annular body 81 extends from the first portion 6 in an opposite direction to the pusher 50.

The container 2 comprises a neck 23 which includes the conduit 21 inside it. The second and the third portion 62, 63 (or the first and the second coupling means 7, 8) contribute to defining respectively a first and a second concavity 70, 80 turned in two opposite directions. Conveniently, the first concavity 70 accomodates at least partially the neck 23 in the first configuration. Conveniently, the second concavity 80 accomodates at least partially the neck 23 in the second configuration. The first portion 6 is conveniently interposed between the first and the second concavity 70, 80. The second and the third portion 2, 3 (or the first and the second coupling means 7, 8) extend from the first portion 6 along two opposite directions substantially parallel to the axis 51 of the pusher 50.

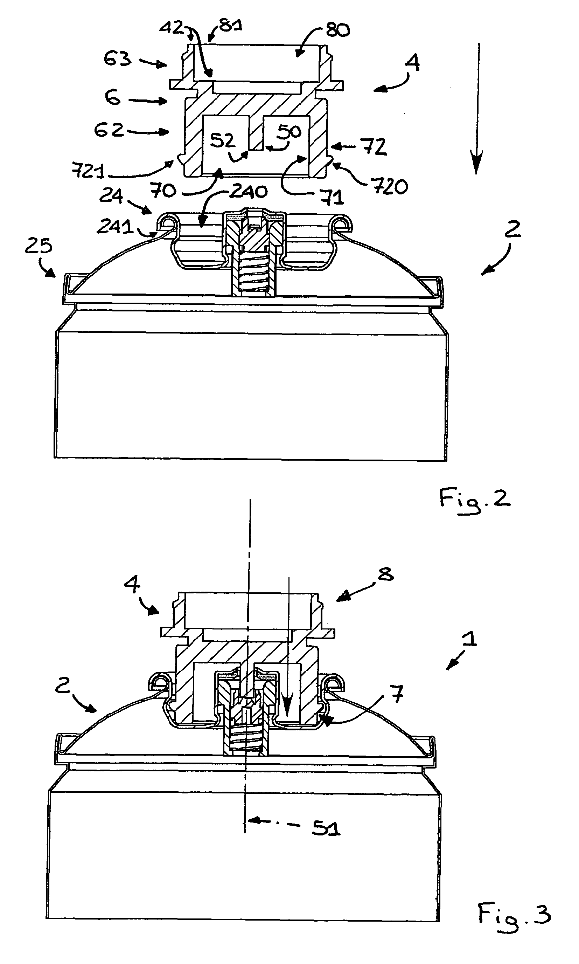

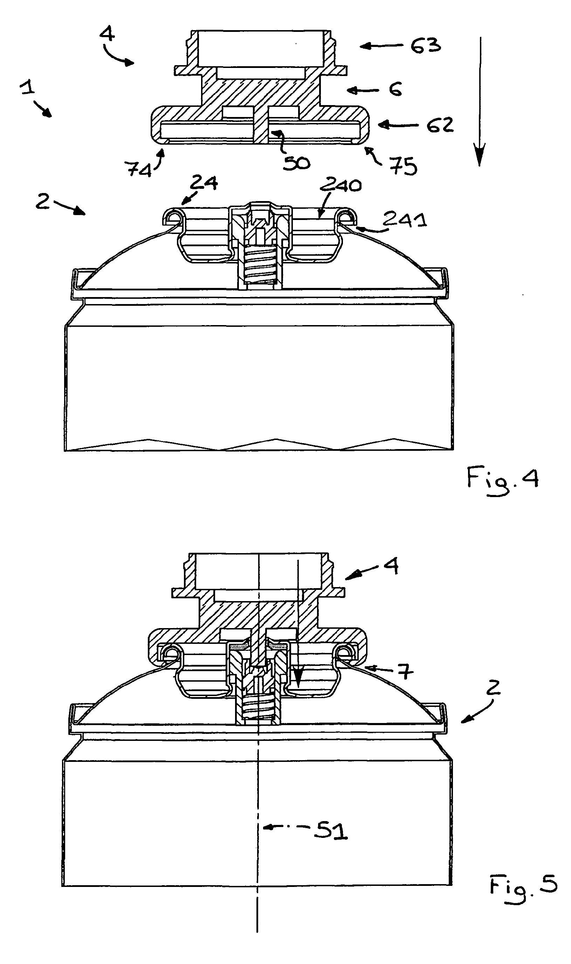

The conduit 21 extends along a first straight line. Advantageously, the conduit 21 at least in the first configuration (but preferably also in the second configuration) is coaxial with the pusher 50. The container 2 comprises a first collar 24. Conveniently, the first collar 24 is situated outside the volume generated by the translation of the neck 23 along the first straight line. In the embodiment shown in Figures 2 and 3, between the first collar 24 and the neck 23 there is an interposed annular cavity 240 for receiving at least partially the first coupling means 7 in the first configuration. In the embodiments illustrated in the accompanying drawings the second coupling means 8 in the second configuration fit in the annular cavity 240. The first collar 24 also forms a recess 241 accessible from the outside of the annular cavity 240. As illustrated by way of an example in Figure 5 the recess 241 allows connection with the first coupling means 7 in the first configuration (more specifically, it receives them at least partially).

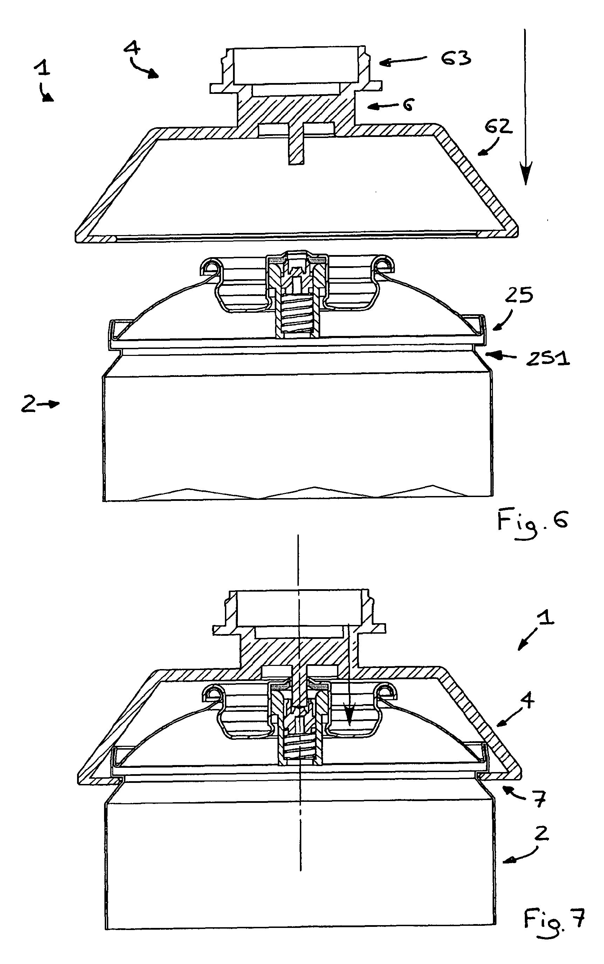

Conveniently, the container 2 comprises a second collar 25 situated outside the volume generated by the translation of the first collar 24 along the first straight line. As illustrated by way of an example in Figure 7 the first coupling means 7 are elastically deformable and attach to the second collar 25. More specifically, the second collar 25 has a groove 251 which extends about the container 2 and in which the first coupling means 7 are fitted. In that case, the first coupling means 7 in the first configuration surround the container 2.

Conveniently, the neck 23 and/or the first collar 24 and/or the second collar 25 are coaxial.

As illustrated by way of an example in Figures 3 and 5, the first coupling means 7 in the first configuration connect to the second collar 24.

The second portion 62 may comprises a first surface 71 turned toward the pusher 50, the first surface 71 in the first configuration comprising a first profile which couples with a second profile formed on an outer surface of the neck 23.

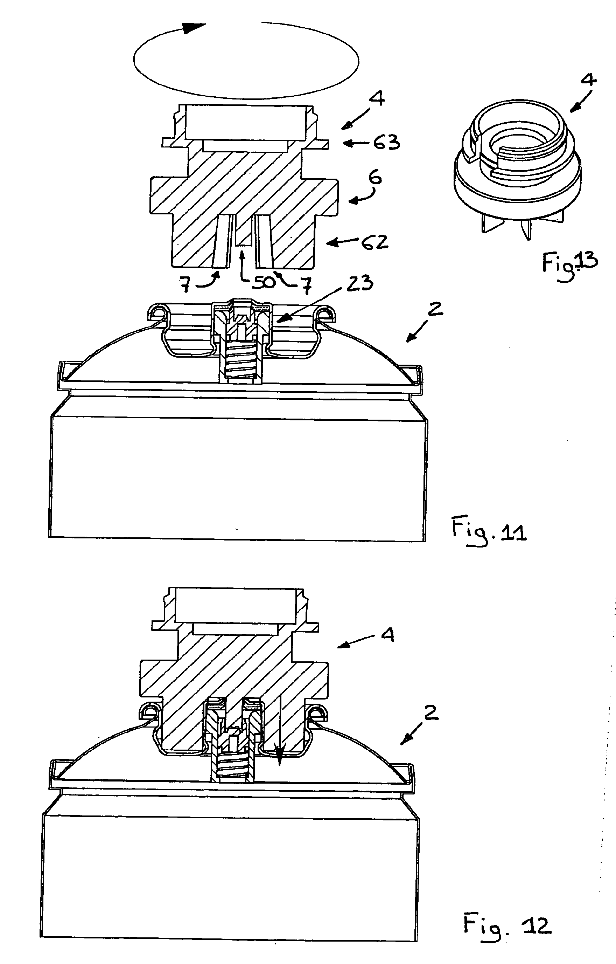

For example, the first profile might be a connection tooth and the second profile might be a groove which receives the tooth. Or (see for example Figures 11, 12, 13) the outer surface of the neck 23 might comprise self-threading means which when connecting with the cap 4 form a groove that holds the self-threading means. The self-threading means comprise for example a plurality of segments. In that case, the first coupling means 7 of the cap 4 are identified by the groove.

As illustrated by way of example in Figure 3 but without limiting the scope of the invention, the second portion 62 comprises a first surface 71 turned toward the pusher 50 and a second surface 72 turned toward a lateral cylindrical surface of an ideal cylinder whose axis coincides with the axis of the pusher 50 and which incorporates the cap 4 within it.

The second surface 72 comprises elastically deformable means 720 which in the first configuration fit into a corresponding profile in the first collar 24. The elastically deformable means 720 comprise a conection tooth 721 typically triangular and preferably equipped with a guide facing in an opposite direction to the first portion 6. Typically, the second and/or the third portion 62, 63 or the first and/or the second coupling means 7, 8 extend between a first end 76a, 77a connected to the first portion 6 and a second end 76b, 77b far from the first portion 6. Advantageously, the guide comprises a sloping surface facing the second end 76b of the first coupling means 7. This allows easy snap-on connection of the container 2.

Preferably, the first coupling means 7 and the second coupling means 8 and the pusher 50 are inseparable, advantageously they are made in a single body without interuptions (and advantageously they are made of the same material, conveniently a plastic material). This is very important as it facilitates manufacture of the cap 4 which might be moulded in a single piece without the need for further assembling (with advantages in terms of increasing manufacturing speed and reducing manufacturing costs). Moreover, since the pusher is made from a single piece with the remaining portions of the cap 4 (in particular the first and the second coupling means 7, 8 or the second and third portion 62, 63) the risk of losing the pusher 50 is reduced.

In the first configuration the first coupling means 7 comprise a first coupling area 74 in which at least three transverse two by two portions clasp a first lip of the container (see Figures 4 and 5). Typically, the first coupling means 7 in the first coupling area 74 are hook-shaped.

In the first configuration the first coupling means 7 comprise a second coupling area 75 in which at least three transverse two by two portions clasp a second lip of the container 2. Typically, the first coupling means 7 in the second coupling area 75 are hook-shaped. Advantageously, the first and the second coupling area 74, 75 might be formed by different arms projecting from the first portion 6 (see Figure 10). In that case a first and a third part 76, 78 of the three transverse two by two portions which clasp a lip of the container 2 extend parallel to each other and at right angles to the axis 51 of the pusher 50, whilst the second part 77 connects the first and the second part 76, 78. The first part 76 is the closest part to the first portion 6. Advantageously, the first part 76 may comprise a through hole 79. The through hole 79 indicates that the undercut formed by the third part 78 is obtained by a slider extending inside the mould used to shape the cap and crosses the first part 76.

In that case the method for making the cap 4 by die forming comprises the following steps:
- positioning next to each other two half-moulds forming in combination an inner chamber;
- placing in the chamber the slider designed to shape with its presence the undercut of the first coupling means 7, a gap being present between one end of the slider and an inside wall of one of the half-moulds, the gap forming the third part;
- introducing the plastic material which solidifies to form the cap 4;
- removing the slider;
- moving away the half-moulds and extracting the cap 4. Advantageously, the first and the second lip of the container 2 are integrated in the first or the second collar 24, 25.

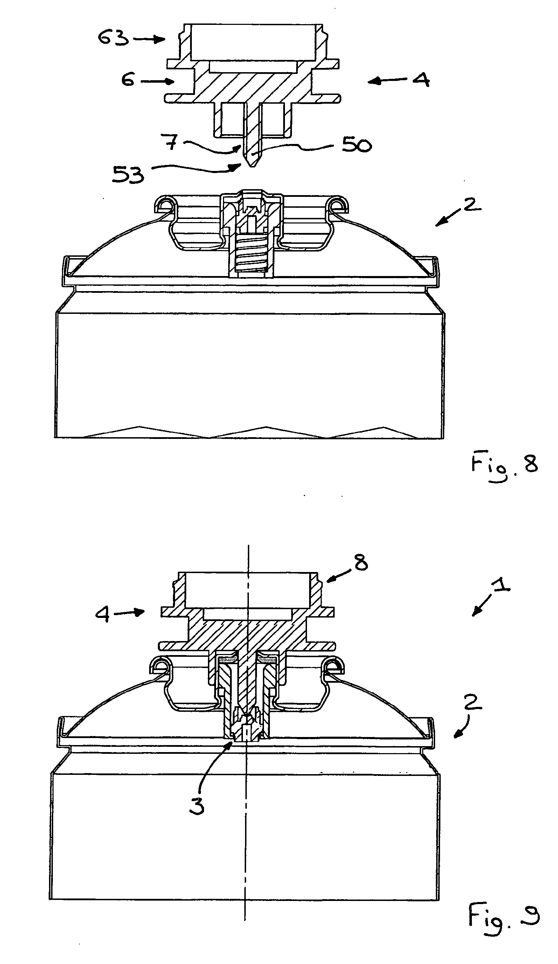

With reference to the embodiment of Figure 9, the pusher 50 comprises/constitutes means 53 for irreversibly breaking through the valve 3. The means for irreversibly breaking through the valve 3 are suitable for irreversibly positioning the valve 3 in a configuration which allows the discharge of pressurised fluid from the container 2.

As illustrated by way of an example in Figures 8 and 9, the first coupling means 7 are made on the pusher 50 (in particular on the lateral surface of the pusher 50). In that case the second portion 62 coincides with the pusher 50. In that case advantageously in the first configuration the first coupling means 7 comprise a threaded structure screwed onto at least one wall of the conduit 21. When the threaded structure is tightened, the pusher 50 pushes the valve 3 toward the inside of the container 2 until breaking through the delivery valve 3 which remains irreversably in an open configuration. Advantageously, in that case the elastic means 31 fall irreversably inside the storage container 20.

Advantageously, there are means of connecting the cap 4 to the container 2 distinct from the first and second coupling means 7, 8 (an embodiment which is not illustrated). The connecting means allow the cap 4 to be connected to the container 2 with the first and the second coupling means 7, 8 moved away from the outlet 22 (or not coupled to the container 2). For example, the container 2 might comprise a wire or a hinge which connects the cap 4 to the container 2. The means of connecting the cap 4 to the container 2 in a third configuration prevents the loss of the cap 4 even when the cap is not connected to the outlet 22 of the container 2.

The operation of the invention is illustrated below. Before using the bottle 1 it is in the second configuration with the cap 4 performing its protective function to prevent damage to the valve 3 or the outlet 22 during transport caused by accidental impact.

To allow use of the bottle 1, the cap 4 is removed and a dispensing device is applied to the outlet 22 allowing controlled delivery of the fluid present in the storage chamber 20.

After use the dispensing device is normally removed.

To guarantee the complete discharge of a fluid from the bottle 1 there is the step of applying the cap 4 to the bottle 1 in the first configuration.

This invention brings important advantages.

Firstly, it provides an inexpensive and robust system allowing the complete discharge of the residual fluid from the container to allow recycling of the bottle. Another important advantage is that integrating two components into one (protective cap and pusher) optimises the components of the bottle with a reduction in costs and an increase in the production speed.

Yet another important advantage is linked to the fact that since the pusher is integrated in a larger structure (the cap) it reduces the possibility of losing the pusher.

Moreover, when not in use the pusher is stably connected to the container (by the second coupling means 8) thus further reducing the possibility of loss.

## Claims

1. A bottle comprising:
i) a container (2) of a pressurised fluid comprising:
- a storage chamber (20) for the fluid;
- a delivery conduit (21) for said fluid, said conduit (21) extending at least between said chamber (20) and an outlet (22) for the exit of the fluid from the container;
- a valve (3) situated along the delivery conduit (21) and movable between a first position in which it prevents the discharge of pressurised fluid from the container (2) and a second position in which it permits the discharge of pressurised fluid from the container (2);
- a neck (23) which includes the conduit (21) inside it;
ii)a cap (4) for covering the outlet (22) for the exit of the fluid from the container (2), said cap (4) being connected to the container (2) at least in a first and in a second configuration of the bottle (1), said second configuration being distinct from the first configuration; said cap (4) comprising:
- means (5) for venting and emptying the residual fluid present in the storage chamber (20) which in turn comprises a pusher (50) suitable for interacting with the valve (3);
- a first portion (6) from which the pusher (50), extending along its preponderant axis (51) of extension, projects outward as far as its first end (52), in the first configuration said pusher (50) projecting from said first portion (6) toward said valve (3);
- first coupling means (7) which in the first configuration are connected to said container (2), said first coupling means (7) extending at least in part along at least a part of an imaginary closed line which surrounds the axis (51) of the pusher (50);
- second coupling means (8) which in the second configuration are connected to said container (2) to enable said cap (4) to protect the outlet (22) from impacts with the outside, said first portion (6) being interposed between the first and the second coupling means (7, 8), in the second configuration said pusher (50) extending from the first portion (6) away from said container (2);
- a second and a third portion (62, 63) which extend away along two opposite directions from said first portion (6), the first and the second coupling means (7,8) being respectively formed in said second and third portion (62, 63); the second and the third portion (62, 63) contributing to defining respectively a first and a second concavity (70, 80) at least partially accommodating said neck (23) respectively in the first and in the second configuration, said first portion (6) being interposed between the first and the second concavity (70, 80);
the bottle being **characterised in that** the first and the second concavity (70, 80) are turned in two opposite directions.

2. The bottle according to claim 1, **characterised in that** in the first configuration, said pusher (50) necessarily pushes the valve (3) into the second position, said cap (4) and said container (2) in the first configuration defining a channel that places the inside of the container (2) and the outside of the bottle (1) in fluid communication.

3. The bottle according to claim 1 or 2, **characterised in that** said conduit (21) extends along a first straight line, said container comprising a first collar (24) which is situated outside the volume generated by the translation of said neck (23) along the first straight line; the first coupling means (7) in the first configuration being connected to said first collar (24).

4. The bottle according to claim 1 or 2 or 3, **characterised in that** the second portion (62) comprises a first surface (71) turned toward the pusher (50), the first surface (71) comprising a first profile which in the first configuration couples with a second profile formed on an outer surface of the neck (23).

5. The bottle according to claim 3, **characterised in that** the second portion (62) comprises a first surface (71) turned toward the pusher (50) and a second surface (72) turned toward a lateral cylindrical surface of an ideal cylinder whose axis coincides with the axis of the pusher (50) and which incorporates said cap (4) within it;
said second surface (72) comprising elastically deformable means (720) which in the first configuration fit into a corresponding profile defined by said first collar (24).

6. The bottle according to any of the preceding claims 1 to 5, **characterised in that** the first coupling means (7), the second coupling means (8) and the pusher (50) are inseparable.

7. The bottle according to any of the preceding claims, **characterised in that** in the first configuration the first coupling means (7) comprise:
- a first coupling area (74) in which at least three transverse two by two portions clasp a first lip of the container;
- a second coupling area (75) in which three transverse two by two portions clasp a second lip of the container.

8. The bottle according to any of the preceding claims, **characterised in that** said pressurised fluid is a fuel.

9. The bottle according to any of the preceding claims, **characterised in that** the pusher (50) constitutes means (53) for irreversibly breaking through said valve (3).

10. The bottle according to claim 9, **characterised in that** the first coupling means (7) are formed on said pusher (50), said second portion (62) coinciding with the pusher (50).

11. The bottle according to claim 1, **characterised in that** the first coupling means (7) extend at least along 75% of a specific imaginary circumference which surrounds the axis (51) of the pusher (50).

## Patentansprüche

1. Flasche umfassend:
i) einen Behälter (2) eines unter Druck stehenden Fluides, umfassend:
- eine Sammelkammer (20) für die Flüssigkeit;
- eine Verteilungsleitung (21) für die besagte Flüssigkeit, wobei die besagte Leitung (21) sich mindestens zwischen der besagten Kammer (20) und einem Auslass (22) für den Austritt der Flüssigkeit aus dem Behälter erstreckt;
ein Ventil (3), das an der Verteilungsleitung angeordnet ist und zwischen einer ersten Position, in der es die Abgabe der Flüssigkeit unter Druck aus dem Behälter verhindert, und einer zweiten Position, in der es die Abgabe der unter Druck stehenden Flüssigkeit aus dem Behälter (2) gestattet;
- einen Hals (23), der die Leitung (21) darin umfasst;
ii) eine Kappe (4), um den Ausgang (22) für den Austritt der Flüssigkeit aus dem Behälter (2) zu decken, wobei die besagte Kappe (4) mit dem Behälter zumindest in einer ersten und in einer zweiten Konfiguration der Flasche (1) verbunden ist, wobei die besagte zweite Konfiguration von der ersten Konfiguration unterschiedlich ist; die besagte Kappe (4) umfassend:
- Mittel zum Belüften und Entleeren die restliche Flüssigkeit in der Sammelkammer (20), die wiederum ein Schubelement (50) zum Zusammenwirken mit dem Ventil (3) umfasst;
- ein erstes Teil (6) von dem das Schubelement (50), das sich längs dessen Hauptachse (51) erstreckt, nach außen wie sein erstes Ende (52) vorsteht, wobei in der ersten Konfiguration das besagte Schubelement (50) von dem besagten ersten Teil (6) zum besagten Ventil (3) vorsteht;
- erste Kopplungsmittel (7), die in der ersten Konfiguration mit dem besagten Behälter (2) derart verbunden sind, dass die besagten Kopplungsmittel (7) mindestens sich längs eines Anteils einer imaginären geschlossenen Linie erstreckt, die die Achse (51) des Schubelementes (50) umschließt;
- zweite Kopplungsmittel (8), die in der zweiten Konfiguration mit dem besagten Behälter (2) derart verbunden sind, dass sie es erlauben, mit der besagten Kappe (4) des Ausgang (22) von Einwirkungen mit der Außerwelt zu schützen, wobei das besagte erste Teil (6) zwischen den ersten und den zweiten Kopplungsmittel (7, 8) zwischengeschaltet ist, wobei in der besagten zweiten Konfiguration das besagte Schubelement sich von dem ersten Teil (6) zu dem besagten Behälter (2) erstrecken;
- ein zweites und ein drittes Teil (62, 63), die sich in zwei entgegengesetzten Richtungen von dem besagten ersten Teil (6) weg erstrecken, wobei das erste und das zweite Kopplungsmittel (7, 8) jeweils in dem besagten zweiten und dritten Teil (62, 63) ausgebildet sind; wobei das zweite und das dritte Teil (62, 63) dazu beitragen, dass sie jeweils eine erste und eine zweite Konkavität (70, 80) definieren, die mindestens teilweise den besagten Hals (23) jeweils in der ersten und in der zweiten Konfiguration aufnimmt, wobei das besagte erste Teil (6) zwischen der ersten und der zweiten Konkavität geschaltet ist;
wobei die Flasche ist derart gekennzeichnet, dass die erste und die zweite Konkavität in zwei entgegengesetzten Richtungen weisen.

2. Flasche nach Anspruch 1, **dadurch gekennzeichnet**, das in der ersten Konfiguration das besagte Schubelement (50) notwendigerweise das Ventil (3) in die zweite Position drückt, wobei die besagte Kappe (4) und der besagte Behälter (2) in der ersten Konfiguration einen Kanal definiert, der das Innere des Behälters (2) und die Außenseite der Flasche (1) in Fluidverbindung bringt.

3. Flasche nach Anspruch 1 oder 2, **dadurch gekennzeichnet, dass** die besagte Leitung (21) sich längs einer ersten Gerade erstreckt, wobei der besagte Behälter einen ersten Kragen (24) umfasst, der außerhalb des von der Verlagerung des besagten Halses (23) längs der besagten Gerade erzeugten Volumens angeordnet ist; wobei die ersten Kopplungsmittel (7) in der ersten Konfiguration mit dem besagten ersten Kragen (24) verbunden sind.

4. Flasche nach Anspruch 1 oder 2 oder 3, **dadurch gekennzeichnet, dass** die zweite Portion (62) eine erste Fläche (71) umfasst, die in Richtung des Schiebers (50) gedreht ist, wobei die erste Fläche (71) ein erstes Profil umfasst, das in der ersten Konfiguration mit einem zweiten auf einer äußeren Fläche des Halses (23) ausgebildeten Profil gekoppelt ist.

5. Flasche nach Anspruch 3, **dadurch gekennzeichnet, dass** die zweite Portion (62) eine erste in Richtung des Schiebers (50) gedrehte Oberfläche (71) und eine zweite in Richtung einer seitlichen zylindrischen Oberfläche eines idealen Zylinders gedrehte Oberfläche (72) umfasst, dessen Achse mit der Achse des Schiebers zusammenfällt und der die besagte Kappe (4) in seinem Inneren beinhaltet;
wobei die besagte zweite Oberfläche (22) elastisch verformbare Mittel (720) umfasst, die in der ersten Konfiguration mit einem entsprechenden von dem besagten Kragen (24) definierten Profil eingepasst sind.

6. Flasche nach jedem der vorhergehenden Ansprüchen 1 bis 5, **dadurch gekennzeichnet, dass** die ersten Kopplungsmittel (7), die zweiten Kopplungsmittel (8) und das Schubelement (50) untrennbar sind.

7. Flasche nach jedem der vorhergehenden Ansprüchen, **dadurch gekennzeichnet, dass** in der ersten Konfiguration die ersten Kopplungsmittel (7) umfassen:
- einen ersten Kopplungsbereich (74), in dem mindestens drei Querbalken paarweise eine erste Lippe des Behälters klemme;
- einen zweiten Kopplungsbereich (75), in dem mindestens der Querbalken paarweise eine zweite Lippe des Behälters klemmen.

8. Flasche nach jedem der vorhergehenden Ansprüchen, **dadurch gekennzeichnet, dass** die besagte Druckflüssigkeit ein Kraftstoff ist.

9. Flasche nach jedem der vorhergehenden Ansprüchen, **dadurch gekennzeichnet, dass** das Schubelement (50) Mittel (53) umfasst, die irreversibel durch das besagte Ventil (3) durchgeführt werden.

10. Flasche nach Anspruch 9, **dadurch gekennzeichnet, dass** die ersten Kopplungsmittel (7) auf dem besagten Schubelement (50) geformt sind, wobei das besagte zweite Teil (62) mit dem Schubelement (50) zusammenfällt.

11. Flasche nach Anspruch 1, **dadurch gekennzeichnet, dass** die ersten Kopplungsmittel (7) sich mindestens um 75% eines spezifischen imaginären Umfangs erstrecken, der die Achse (51) des Schubelementes (50) umschließt.

## Revendications

1. Bouteille comprenant :
i) un récipient (2) d'un fluide sou pression, comprenant :
- une chambre de stockage (20) pour le fluide ;
- un conduit de distribution (21) pour ledit fluide, ledit conduit (21) s'étendant au moins entre ladite chambre (20) et une sortie (22) pour la décharge du fluide du récipient ;
- une soupape (3) située le long du conduit de distribution (21) et mobile entre une première position dans laquelle elle empêche la décharge d'un fluide sous pression du récipient (2) et une deuxième position dans laquelle elle permet la décharge d'un fluide sous pression du récipient (2) ;
- un cou (23) qui comprend le conduit (21) à son intérieur ;
ii) un capuchon (4) pour couvrir la sortie (22) pour la décharge du fluide du récipient (2), ledit capuchon (4) étant connecté au récipient (2) au moins dans une première et une deuxième configuration de la bouteille (1), ladite deuxième configuration étant distincte de la première configuration ; ledit capuchon (4) comprenant :
- des moyens (5) pour l'aération et la vidange du fluide résiduel présent dans la chambre de stockage (20) qui à la fois comprend un élément de sollicitation (50) apte à interagir avec la soupape (3) ;
- d'une première portion (6) duquel l'élément de sollicitation (50) s'étend le long de son axe prépondérant (51) d'extension, en faisant saillie vers l'extérieur come sa première extrémité (52) et dans ladite première configuration ledit élément de sollicitation (50) fait saillie à partir de la première portion (6) vers ladite soupape (3),
- des premiers moyens de couplage (7) qui dans la première configuration sont connectés audit récipient (2), lesdits premiers moyens de couplage (7) s'étendant au moins en partie le long d'au moins une partie d'une ligne imaginaire fermée qui entoure l'axe (51) de l'élément de sollicitation (50) ;
- des deuxièmes moyens de couplage (8) qui dans la deuxième configuration sont connectés audit récipient (2) pour permettre audit capuchon (4) de protéger la sortie (22) contre des chocs avec l'extérieur, ladite première portion (6) étant interposée entre les premiers et les deuxièmes moyens de couplage (7, 8), dans la deuxième configuration ledit élément de sollicitation (50) s'étendant de la première portion (6) loin du dit récipient (2) ;
- une deuxième et une troisième portion (62, 63) qui s'étendent le long de deux directions opposées à partir de ladite première portion (6), les premiers et deuxièmes moyens de couplage (7, 8) étant respectivement formés dans ladite deuxième et troisième portion (62, 63) ; la deuxième et la troisième portion (62, 63) contribuant à définir respectivement une première et une deuxième concavité (70, 80) qui au moins partiellement loge ledit cou (23) respectivement dans la première et la deuxième configuration, ladite première portion (6) étant interposée entre la première et la deuxième concavité (70, 80) ;
la bouteille étant **caractérisée en ce que** la première et la deuxième concavité (70, 80) sont tournées dans deux directions opposées.

2. Bouteille selon la revendication 1, **caractérisée en ce que** dans la première configuration, ledit élément de sollicitation (50) nécessairement pousse la soupape (3) dans la deuxième position, ledit capuchon (4) et ledit conteneur (2) dans la première configuration définissant un canal qui place l'intérieur du conteneur (2) et l'extérieur du cylindre (1) en communication de fluide.

3. Bouteille selon la revendication 1 ou 2, **caractérisée en ce que** ledit conduit (21) s'étend le long d'une première ligne droite, ledit conteneur comprenant un premier collier (24) qui est situé à l'extérieur du volume généré par la translation dudit cou (23) le long de la première ligne droite ; le premier moyen de couplage (7) dans la première configuration étant connecté audit premier collier (24).

4. Bouteille selon la revendication 1 ou 2 ou 3, **caractérisé en ce que** la deuxième portion (62) comprend une première face (71) tournée vers l'élément de sollicitation (50), la première face (71) comprenant un premier profil qui dans la première configuration est couplé avec un deuxième profil formé sur une face extérieure du cou (23).

5. Bouteille selon la revendication 3, **caractérisé en ce que** la deuxième portion (62) comprend une première surface (71) tournée vers l'élément de sollicitation (50) et une deuxième surface (72) tournée vers une surface latérale cylindrique d'un cylindre idéal dont l'axe coïncide avec l'axe de l'élément de sollicitation (50) et qui incorpore ledit capuchon (4) à l'intérieur de celui-ci ;
ladite deuxième surface (72) comprenant des moyens déformables élastiquement (720) qui dans la première configuration s'accouplent entre un profil correspondant défini par ledit premier collier (24).

6. Bouteille selon une quelconque des revendications précédentes 1 à 5, **caractérisée en ce que** les premiers moyens de couplage (7), les deuxièmes moyens de couplage (8) et le dispositif de sollicitation (50) sont inséparables.

7. Bouteille selon une quelconque des précédentes revendications, **caractérisée en ce que** dans la première configuration les premiers moyens de couplage (7) comprennent :
- une première zone de couplage (74) dans laquelle au moins trois traverses fixent deux par deux des portions d'un premier lèvre du conteneur ;
- une deuxième zone de couplage (759 dans laquelle trois traverses fixent deux par deux des portions d'un deuxième lèvre du conteneur.

8. Bouteille selon une quelconque des précédentes revendications, **caractérisée en ce que** ledit fluide pressurisé est un carburant.

9. Bouteille selon une quelconque des précédentes revendications, **caractérisée en ce que** l'élément de sollicitation (50) forme des moyens (53) pour une interruption irréversible par ladite soupape (3).

10. Bouteille selon la revendication 9, **caractérisée en ce que** les premiers moyens de couplage (7) sont formés sur ledit élément de sollicitation (50), ladite deuxième portion (62) coïncidant avec l'élément de sollicitation.

11. Bouteille selon la revendication 1, **caractérisée en ce que** les premiers moyens de couplage (7) s'étendent au moins le long de 75% d'une circonférence imaginaire spécifique qui entoure l'axe (51) de l'élément de sollicitation (50).
